(19) **Europäisches Patentamt**
**European Patent Office**
**Office européen des brevets**

(11) **EP 3 805 801 A1**

(12) **EUROPEAN PATENT APPLICATION**

(43) Date of publication:
**14.04.2021 Bulletin 2021/15**

(51) Int Cl.:
***G01S 19/21*** *(2010.01)*

(21) Application number: **19202543.5**

(22) Date of filing: **10.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HERE Global B.V.**
**5611 ZT Eindhoven (NL)**

(72) Inventor: **RAUTALIN, Sakari Kalevi**
**33540 Tampere (FI)**

(74) Representative: **Cohausz & Florack**
**Patent- & Rechtsanwälte**
**Partnerschaftsgesellschaft mbB**
**Bleichstraße 14**
**40211 Düsseldorf (DE)**

(54) **IDENTIFYING GNSS NAVIGATION DATA AS POTENTIALLY MANIPULATED OR AS TRUSTWORTHY AT LEAST PARTIALLY BASED ON AN ESTIMATED DEVIATION OF A SECOND ESTIMATE OF A SATELLITE STATE FROM A FIRST ESTIMATE OF THE SATELLITE STATE**

(57)    It is inter-alia disclosed a method performed by at least one apparatus, said method comprising:
- obtaining or causing obtaining a first estimate of a current state of at least one GNSS satellite at least partially based on GNSS navigation data relating to the current state;
- obtaining or causing obtaining a second estimate at least of the current state of the at least one GNSS satellite at least partially based on a system model of motion of the at least one GNSS satellite;
- determining or causing determining, whether or not the GNSS navigation data are potentially manipulated based on an estimated deviation of the second estimate of the current state of the at least one GNSS satellite from the first estimate of the current state of the at least one GNSS satellite.

Fig.3

**Description**

**FIELD OF THE DISCLOSURE**

The invention relates to the field of GNSS based radio positioning and more specifically to identifying GNSS navigation data relating to a current state of at least one GNSS satellite as potentially manipulated or as trustworthy at least partially based on an estimated deviation of a second estimate of a current state of the at least one GNSS satellite from a first estimate of the current state of the at least one GNSS satellite obtained based on the GNSS navigation data.

**BACKGROUND**

Global navigation satellite systems (GNSS) such as the Global Positioning System (GPS) or the Galileo system form a basis for satellite based positioning. A mobile device receiving GNSS signals of e.g. four GNSS satellites may estimate its position based on GNSS navigation data included in GNSS signals received from each respective one of the four GNSS satellites. With Assisted-GNSS technology, GNSS signal receivers, e.g. in mobile devices, may obtain GNSS assistance data in addition to GNSS navigation data, for example to take account of deteriorated GNSS signals e.g. in urban areas and/or to reduce the time required for acquiring GNSS satellite signals and GNSS navigation data, and for calculating a first position solution (time-to-first-fix, TTFF). GNSS systems include e.g. the GPS system, the Galileo system, the GLONASS system and the Beidou system. In addition to these four global satellite constellations, regional GNSS (augmentation) systems exist which comprise QZSS, MSAS, WAAS, EGNOS, GAGAN and SDCM.

GNSS signals for civilian use are not encrypted. Thus, spoofing devices may be installed in certain areas for broadcasting spoofed GNSS signals that resemble true GNSS signals broadcast by GNSS satellites, however, that include manipulated GNSS navigation data. Receivers of GNSS devices (e.g. mobile devices) may be subject to manipulation ("spoofing") if such spoofed GNSS signals are received instead of true GNSS signals e.g. as a result of higher signal strength. GNSS receivers that are subjected to such spoofed GNSS signals may be caused to output erroneous position and/or time data. Such manipulation techniques are a threat e.g. to services which rely on trustworthy positioning, for example car sharing services.

**SUMMARY OF SOME EMBODIMENTS OF THE INVENTION**

It is inter-alia an object of the present invention to improve satellite signal based positioning technologies by mitigating the threat associated with such manipulation techniques.

According to an exemplary aspect of the invention, a method performed by at least one apparatus is disclosed, said method comprising:

- obtaining or causing obtaining a first estimate at least of a current state of at least one GNSS satellite at least partially based on GNSS navigation data relating to the current state;
- obtaining or causing obtaining a second estimate at least of the current state of the at least one GNSS satellite at least partially based on a system model of motion of the at least one GNSS satellite;
- determining or causing determining, whether or not the GNSS navigation data are potentially manipulated based on an estimated deviation of the second estimate of the current state of the at least one GNSS satellite from the first estimate of the current state of the at least one GNSS satellite.

For the method according to the exemplary aspect of the invention, an apparatus is furthermore disclosed (and subsequently referred to as apparatus according to the exemplary aspect of the invention) that is configured to perform and/or control the method or comprises respective means for performing and/or controlling the steps of the method. In this case, it is possible either for all the steps of the method to be controlled, or for all the steps of the method to be performed, or for one or more steps to be controlled and one or more steps to be performed. One or more of the means can also be performed and/or controlled by the same unit By way of example, one or more of the means may be formed by one or more processors.

For the method according to the exemplary aspect of the invention, an apparatus is furthermore disclosed (and subsequently referred to as apparatus according to the exemplary aspect of the invention) that comprises at least one processor and at least one memory that contains program code, wherein the memory and the program code are configured to use the at least one processor to cause an apparatus (for example the apparatus having the processor and the memory) to perform and/or control at least the method. In this case, it is possible either for all the steps of the respective method to be controlled, or for all the steps of the respective method to be performed, or for one or more steps to be controlled and one or more steps to be performed.

The apparatus according to the exemplary aspect of the invention may correspond to a mobile device, e.g. a smart home device, a smartphone, a tablet computer, a notebook computer, a smart watch, a Device-2-Device (D2D) communication device, a Vehicle-2-Vehicle (V2V) communication device, a Vehicle-2-Everything (V2X) communication device, a Road Side Unit (RSU) or a smart band.

For the method according to the exemplary aspect of the invention, a system is furthermore disclosed (and subsequently referred to a system according to the exemplary aspect of the invention) that comprises one or more apparatuses that are configured to perform and/or control the method or have means for performing and/or controlling the steps of the method. In this case, it is possible either for all the steps of the method to be controlled, or for all the steps of the method to be performed, or for one or more steps to be controlled and one or more steps to be performed.

For the method according to the exemplary aspect of the invention, a computer program is furthermore disclosed (and subsequently referred to as computer program according to the exemplary aspect of the invention) that comprises program instructions that cause a processor to perform and/or control the method when the computer program runs on the processor. In this specification, a processor is intended to be understood to mean control units, microprocessors, microcontrol units such as microcontrollers, digital signal processors (DSP), application-specific integrated circuits (ASICs) or field programmable gate arrays (FPGAs), inter alia.

In this case, it is possible either for all the steps of the method to be controlled, or for all the steps of the method to be performed, or for one or more steps to be controlled and one or more steps to be performed. By way of example, the computer program may be distributable via a network such as the internet, a telephone or mobile radio network and/or a local area network, for example. The computer program may at least in part be software and/or firmware of a processor. It may equally be implemented at least in part as hardware. By way of example, the computer program may be stored on a computer-readable storage medium, e.g. a magnetic, electric, electromagnetic, optical and/or other kind of storage medium. By way of example, the storage medium may be part of the processor, for example a (nonvolatile or volatile) program memory of the processor or a part thereof. By way of example, the storage medium is substantive, that is to say tangible, and/or non-transitory.

According to a further exemplary aspect of the invention, a system is disclosed which comprises at least one of (1) the disclosed apparatus(es) (e.g. a mobile device) or (2) a server. Optionally, the system may further comprise one or more GNSS satellites.

The server (e.g. an assistance data server) may be configured to provide (e.g. transmit) the GNSS navigation data (e.g. as part of or as GNSS assistance data) to the at least one apparatus, e.g. to the mobile device.

The server may be part of a plurality of servers (e.g. forming a server cloud) or may be represented by such a plurality of servers (e.g. forming a server cloud). Alternatively or additionally, the server may be part of a cellular communication network.

The disclosed method according to the above exemplary aspect of the invention may serve for identifying the GNSS navigation data as potentially manipulated or as trustworthy (i.e. to be not potentially manipulated).

Exemplary embodiments of all aspects of the present invention have some or all of the properties described below.

As mentioned above, an exemplary aspect of the invention is a method performed by at least one apparatus. According to an exemplary embodiment, the at least one apparatus is a mobile device, for example, a smart home device, a smartphone, a tablet computer, a notebook computer, a smart watch, a Device-2-Device (D2D) communication device, a Vehicle-2-Vehicle (V2V) communication device, a Vehicle-2-Everything (V2X) communication device, a Road Side Unit (RSU) or a smart band. In an alternative embodiment, the at least one apparatus may correspond to a module of such mobile device (the module for example comprising one or more processors) or may correspond to one or more processors. In such embodiment, the at least one apparatus is configured to cause any one or more of the actions in accordance with the exemplary aspect of the present invention and its embodiments.

For example, the disclosed method may be part of a GNSS based positioning solution. The mobile device may be enabled for or support such a GNSS based positioning solution for example the Galileo system or the GPS system. This may be understood to mean that the at least one apparatus is configured to estimate its position (e.g. determine a position estimate of its position) at least partially based on one or more GNSS signals (e.g. GNSS signals received from at least four GNSS satellites) observed at this position. The mobile device may be configured for (e.g. periodically, repeatedly or continuously) scanning for GNSS signals observable at the position of the mobile device.

In turn, any GNSS satellite orbiting the Earth may be configured to (e.g. periodically, repeatedly or continuously) broadcast the GNSS signals, the GNSS signals comprising GNSS navigation data. For example, a GNSS satellite may (e.g. periodically or repeatedly or continuously) broadcast a respective GNSS signal conveying a message containing the GNSS navigation data of the respective satellite (i.e. the GNSS navigation data are part of the message). While receiving GNSS navigation data may accordingly be understood to mean that the GNSS navigation data are received from a GNSS satellite, GNSS navigation signals may likewise be received from a spoofing device. Thus, receiving GNSS navigation data may be understood to mean receiving a GNSS signal conveying a message containing GNSS navigation data from the GNSS satellite or the spoofing device. An example of such a message is a Galileo F/NAV message as specified by the Galileo open service specifications that are presently available in the Internet under https://www.gsc-europa.eu/electronic-library/programme-reference-documents#open. Another example for such a message is a GPS navigation message as specified by the GPS specifications that are presently available in the Internet under https://www.gps.gov/technical/.

Alternatively or additionally, GNSS navigation data may be provided by a server (e.g. a server of or supporting the GNSS based position solution), for example the GNSS navigation data may be provided by the server as part of or as GNSS assistance data. Accordingly, receiving GNSS navigation data may as well be understood to mean that the GNSS navigation data are received from such a server (e.g. as part of GNSS assistance data). In particular, the GNSS navigation data may be provided by the server as part of or as GNSS assistance data according to an assisted GNSS based positioning solution like assisted GPS or assisted Galileo. An example of such an assisted GNSS based positioning solution is assisted Global Navigation Satellite System (A-GNSS) as specified by the 3GPP for different cellular communication networks like a 2G/3G/4G/5G cellular communication network. Accordingly, the GNSS navigation data may be received as part of GNSS assistance data from a server of a cellular communication network via a wireless communication path. An example of such a wireless communication path is a wireless communication connection or link in a cellular network. A cellular communication network may for example be a 2G/3G/4G/5G cellular communication network. The 2G/3G/4G/5G cellular radio communication standards are developed by the 3GPP and presently available under http://www.3gpp.org/. It is however to be understood that the invention is not limited to this.

In an exemplary embodiment, the GNSS navigation data comprises at least ephemeris data. Such ephemeris data contained by GNSS navigation data of a certain GNSS satellite may be valid for a certain time period and may enable determining an orbital position of the certain GNSS satellite within this certain time period (e.g. at any given time of this certain time period).

In an exemplary embodiment, the GNSS navigation data further comprises clock data. Such clock data contained by GNSS navigation data of a certain GNSS satellite may be valid for a certain time period and may enable determining a deviation of a clock of this certain GNSS satellite from a GNSS system time within this certain time period (e.g. at any given time of this certain time period), It is to be understood that a real orbital position of this certain GNSS satellite or a real deviation of a clock of this certain GNSS satellite may deviate from an orbital position of this certain GNSS satellite or a deviation of a clock of this certain GNSS satellite determined based on these ephemeris data or clock data. Nevertheless, the accuracy of the determined orbital position of this certain GNSS satellite or the determined deviation of a clock of this certain GNSS satellite may be considered to be sufficient for the GNSS based positioning solution within this certain time period.

As mentioned, the method according to the above exemplary aspect of the present invention comprises a step of

- obtaining or causing obtaining a first estimate at least of a current state of at least one GNSS satellite at least partially based on GNSS navigation data relating at least to the current state.

Obtaining or causing obtaining the first estimate at least of the current state may be understood to mean for example, at the at least one apparatus, estimating, calculating or causing estimating, causing calculating the first estimate at least of the current state. The GNSS navigation data relating to the current state may be obtained at the at least one apparatus (e.g. received by the at least one apparatus) from the at least one GNSS satellite and/or from a server (e.g. an assistance data server). The GNSS navigation data may comprise ephemeris data, clock data and/or assistance data relating to the at least one GNSS satellite. For example, the at least one apparatus may obtain a first estimate of the current state of the at least one GNSS satellite at least partially based on GNSS navigation data relating to the current state and may subsequently obtain a first estimate of a next state subsequent to the current state of the at least one GNSS satellite at least partially based on GNSS navigation data relating to the next state subsequent to the current state. In such way, the at least one apparatus may obtain one or more first estimates (e.g. one first estimate or a sequence of first estimates) based on respective obtained GNSS navigation data respectively relating to the respective state. As explained in more detail below, a sequence of first estimates thus obtained may resemble an observation orbit of states of the at least one apparatus.

In an exemplary embodiment, a state of the at least one GNSS satellite comprises at least a position (an orbital position) of the at least one GNSS satellite at a certain time. In this exemplary embodiment, the state of the at least one GNSS satellite may further comprise a timestamp indicative of said certain time corresponding to the position of the at least one GNSS satellite. For example, the current state may comprise a position of the at least one GNSS satellite at a current time. It is to be noted that a current time may for example be a time (e.g. one or more points in a time interval, e.g. in an interval corresponding to a lifetime of corresponding GNSS navigation data) corresponding to GNSS navigation data based on which the at least one apparatus (for example the mobile device) obtains a position estimate of the at least one apparatus (e.g. estimates its position). In other words, the GNSS navigation data relating to the current state may be understood to mean GNSS navigation data of the current time. Thereby, it is to be noted that a time at which a mobile device estimates its position based on GNSS navigation data may be slightly later than a time at which the GNSS navigation data is sent by the at least one GNSS satellite and/or a server. Such time shift may be caused by a delay due to the time needed for the data to be transmitted from the satellite and/or the server to the mobile device (said time may include traveling time, intermediate processing time, etc). Nevertheless, the current time relates for example to a current position of the at least one GNSS satellite and both parameters are usable by the mobile device for performing position estimation. Thus, as used herein, current time refers to the time of the current state of the at least one GNSS satellite, e.g. to the time corresponding to the orbital position of the at least one GNSS satellite derivable from ephemeris data included in GNSS navigation data relating to the current state.

In this exemplary embodiment, the state of the at least one GNSS satellite may further comprise a velocity of the at least one GNSS satellite at said certain time. In other words, in this exemplary embodiment, the state of the at least one GNSS satellite may comprise a timestamp indicative of a certain time, a position of the at least one GNSS satellite at the certain time and/or a velocity of the at least one GNSS satellite at the certain time. For example, the current state of the at least one GNSS satellite may thus comprise a timestamp indicative of the current time, a position of the at least one GNSS satellite at the current time and/or a velocity of the at least one GNSS satellite at the current time.

As mentioned above, GNSS navigation data may comprise ephemeris data, which may enable determining an orbital position of the GNSS satellite at a given time (e.g. within a given time period). For example, the ephemeris data may represent or contain Keplerian parameters. In particular, the ephemeris data may represent or contain ephemeris parameters as specified by the Galileo open service specifications or GPS specifications. Obtaining or causing obtaining the first estimate of the state of the at least one GNSS satellite at least partially based on the GNSS navigation data may thus in an exemplary embodiment be understood as obtaining or causing obtaining (e.g. estimating or causing estimating at the at least one apparatus) an estimate of a position (of an orbital position) of the at least one GNSS satellite based on ephemeris data included in the GNSS navigation data. In other words, when obtaining the first estimate of the state of the at least one GNSS satellite, the at least one apparatus may obtain (e.g. determine, estimate, calculate) the position of the at least one GNSS satellite based on GNSS navigation data (received from the at least one GNSS satellite and/or a server, e.g. based on ephemeris data included therein) of this position.

As further mentioned above, GNSS navigation data may be obtained (e.g. received) by the at least one apparatus from the at least one GNSS satellite and/or from a server (e.g. an assistance data server). Said GNSS navigation data may thereby be obtained (e.g. received) only from the at least one GNSS satellite or only from the server or part thereof may be received from the at least one GNSS satellite and part thereof may be received from the server. For example, in the latter case, the ephemeris data included in the GNSS navigation data may be received from the at least one GNSS satellite while assistance data to support estimation of the state (e.g. position and/or corresponding timestamp) of the at least one GNSS satellite may be obtained (e.g. received) from the server. Thus, in an exemplary embodiment, the GNSS navigation data may further comprise GNSS assistance data including information elements for example carrying reference location, reference time and also ephemeris data.

Thus, obtaining or causing obtaining a first estimate of a current state of at least one GNSS satellite at least partially based on GNSS navigation data relating at least to the current state may in an exemplary embodiment be understood to mean obtaining or causing obtaining at least a first estimate of a current position and/or a current velocity and/or corresponding timestamp of the at least one GNSS satellite at least partially based on GNSS navigation data relating at least to the current state. Said first estimate of the current position and/or the current velocity and/or corresponding timestamp may be determined for example based on ephemeris data and/or clock data comprised by the GNSS navigation data relating to the current state. It is noted that navigation data received from one or more GNSS satellites may be valid for a certain time period. For example, in a GPS system, a nominal validity period of GPS data may correspond to 240 minutes, for example to two hours in advance to a reference time and to two hours after the reference time. Positions and velocities of a GNSS satellite may for example be calculated during such lifetime period and may e.g. be used as observed orbit or measurement data when using a Kalman filter as described in detail below.

In addition to being configured to obtain or causing obtaining the first estimate of the current state based on said current GNSS navigation data, the at least one apparatus is configured to obtain a second estimate of this current state based on a system model of motion of the at least one GNSS satellite. As mentioned above, the method according to the exemplary aspect of the present invention thus further comprises a step of

- obtaining or causing obtaining a second estimate at least of the current state of the at least one GNSS satellite at least partially based on a system model of motion of the at least one GNSS satellite.

Obtaining or causing obtaining the second estimate at least of the current state may be understood to mean for example, at the at least one apparatus, estimating, calculating or causing estimating, causing calculating the second estimate at least of the current state.

For example, the at least one apparatus may obtain a second estimate of the current state of the at least one GNSS satellite at least partially based on the system model and may subsequently obtain a second estimate of a next state (this next state e.g. corresponding to the above mentioned next state in case of the first estimate) subsequent to the current state of the at least one GNSS satellite at least partially based the system model. In such way, the at least one apparatus may obtain one or more second estimates (e.g. one second estimate or a sequence of second estimates, such sequence of second estimates corresponding, e.g. in time, to the above mentioned sequence of first estimates).

When obtaining or causing obtaining such a sequence of second estimates, the at least one apparatus may thereby obtain a reference orbit of the at least one GNSS satellite. In such case, the estimate at least of the current state may comprise for example a sequence of states including the current state (e.g. a sequence of orbital positions and/or velocities) of the at least one GNSS satellite obtained, e.g. calculated, based on the system model of motion of the at least one GNSS satellite. As mentioned, likewise, when obtaining or causing obtaining the first estimate at least of a current state of at least one GNSS satellite at least partially based on GNSS navigation data relating at least to the current state, the at least one apparatus may thereby obtain an observation orbit of the at least one GNSS satellite. In such case, obtained GNSS navigation data may be validated e.g. based on a comparison of the reference orbit with the observation orbit Alternatively, as will be explained in more detail below, when obtaining or causing obtaining the second estimate at least of the current state of the at least one GNSS satellite at least partially based on a system model of motion, the at least one apparatus may thereby obtain a reference orbit based on the system model of motion while taking into account obtained GNSS navigation data as observations, e.g. employing a Kalman filter, Validation of the received GNSS navigation data may then be achieved for example using a measure of an accuracy of the obtained reference orbit, e.g. using a covariance of said reference orbit.

Thereby, the system model of motion of the at least one GNSS satellite is in an exemplary embodiment a mathematical model that enables describing at least part of the orbit of the at least one GNSS satellite. In other words, in an exemplary embodiment, the system model of motion enables determining (e.g. estimating and/or calculating) at least position and/or velocity of the at least one GNSS satellite at a certain time. Thus, obtaining or causing obtaining a second estimate at least of the current state of the at least one GNSS satellite at least partially based on a system model of motion of the at least one GNSS satellite may in an exemplary embodiment be understood to mean obtaining or causing obtaining a second estimate of the current position and/or the current velocity of the at least one GNSS satellite at least partially based on said system model of motion.

In one example, based on the system model of motion, the at least one apparatus may be configured to employ orbital prediction using an orbital model for example employing Keplerian parameters with harmonic perturbation components to describe the orbit.

In another example, the system model of motion of the at least one GNSS satellite may further or alternatively be based on forces acting on the at least one GNSS satellite and may thus correspond to one or more corresponding equations of motion. Such force based system model may take into account a number of forces acting on the at least one GNSS satellite for example depending on how many sources of gravitational forces are taken into account. Said number of forces and the corresponding complexity of the model may be determined by the capability of the at least one apparatus. Forces that may be taken into account may include the gravitational force exerted on the satellite by the earth, the gravitational force exerted on the satellite by the sun, the gravitational force exerted on the satellite by the moon and/or a force due to the solar radiation pressure.

The current state of the at least one GNSS satellite (a first estimate thereof) is thus on the one hand determined based on received GNSS navigation data. On the other hand, the current state (a second estimate thereof) of the at least one GNSS satellite is independently determined based on the system model to validate the current state (the first estimate thereof) determined based on the received GNSS navigation data. This may enable the at least one apparatus to recognize if the GNSS navigation data relating to the current state is potentially manipulated (spoofed).

Thus, as mentioned above, the method according to the exemplary aspect of the present invention further comprises a step of

-   determining or causing determining, whether or not the GNSS navigation data are potentially manipulated based on an estimated deviation of the second estimate of the current state of the at least one GNSS satellite from the first estimate of the current state of the at least one GNSS satellite.

The GNSS navigation data may be received at the at least one apparatus from a GNSS satellite and/or the server such as an assistance data server and/or from a spoofing device. In case the GNSS navigation data is received from such spoofing device, the data is likely to be manipulated. In other words, as mentioned above, an attacker may install a spoofing device in a certain area which broadcasts a spoofed GNSS signal. Such spoofed GNSS signal may be falsified in that it resembles a GNSS signal broadcasted for example from a GNSS satellite, however conveys a message containing manipulated GNSS navigation data, for example to cause the at least one apparatus (e.g. a mobile device) to estimate its position to be somewhere other than it actually is. By obtaining (e.g. determining) the first estimate of the satellite state based on current GNSS navigation data and obtaining (e.g. determining) the second estimate based on a system model of motion independently of the current GNSS navigation data, this threat may be mitigated by the disclosed method.

To this end, the disclosed method makes use of an estimated deviation of the second estimate of the current state of the at least one GNSS satellite from the first estimate of the current state of the at least one GNSS satellite. In one exemplary embodiment, said estimated deviation may be a difference between a first position corresponding to the first estimate of the current state of the at least one GNSS satellite and a second position corresponding to the second estimate of the current state of the at least one GNSS satellite. In an alternative or additional exemplary embodiment, as explained in more detail below, said estimated deviation may be a statistical or probabilistic value, parameter or operator related to the second estimate of the current state of the at least one GNSS satellite, e.g. to the covariance of said second estimate. According to the disclosed method, for example, if an estimated deviation is larger than a predefined value, said GNSS navigation data relating to the current state may be determined to be manipulated (spoofed).

For example, if said difference between the first position and the second position is equal to or larger than a threshold value (which may be a threshold value stored at the at least one apparatus), the GNSS navigation data relating to the current state may be determined to be potentially manipulated. Further, said statistical value may for example correspond to a covariance of the second estimate of the current state determined by using a statistical mathematical model taking into account for example said forces and an initial state of the at least one GNSS satellite (an example of the system model of motion). In such case, said covariance of the second estimate of the current state may provide an estimated deviation of the second estimate from the first estimate. If such covariance is equal to or larger than a threshold value, the GNSS navigation data relating to the current state may be determined to be potentially manipulated.

Thus, in an exemplary embodiment, the GNSS navigation data relating to the current state are determined to be potentially manipulated if the estimated deviation of the second estimate of the current state of the at least one GNSS satellite from the first estimate of the current state of the at least one GNSS satellite is or is representative of a value equal to or larger than a threshold value.

According to an exemplary embodiment of the invention, the method further comprises:

- obtaining or causing obtaining an estimate of a previous state of the at least one GNSS satellite.

Thereby, the previous state of the at least one GNSS satellite may correspond to an earlier state (e.g. a position and/or a velocity at a time (e.g. one or more points in a time interval, e.g. in an interval corresponding to a lifetime of corresponding GNSS navigation data) earlier as compared to the current time). Such previous state may correspond to an initial state for example supporting or enabling a (numerical) integration of said at least one equation of motion to obtain the second estimate of the current state of the at least one GNSS satellite. Similarly, such previous data may be usable for example when employing a filtering and/or smoothing algorithm (e.g. a statistical mathematical model taking into account for example said forces and the previous/initial state of the at least one GNSS satellite) for obtaining the second estimate of the current state of the at least one GNSS satellite.

In other words, in said exemplary embodiment of the present invention:

- the obtaining or causing obtaining the second estimate of the current state of the at least one GNSS satellite is further based on the estimate of the previous state of the at least one GNSS satellite.

Thereby, in an exemplary embodiment, the previous state of the at least one GNSS satellite, e.g. the position and/or the velocity of the at least one GNSS satellite at a point in time preceding the time of the current state (the current time), may be received from the at least one GNSS satellite and/or from said assistance data server.

In an exemplary embodiment, the system model of motion of the at least one GNSS navigation satellite is based at least in part on at least one force acting on the at least one GNSS satellite, the at least one force being at least one of:

- a gravitational force caused by the sun;
- a gravitational force caused by the earth;
- a gravitational force caused by the moon; or
- a force caused by the solar radiation pressure.

Hereby, the gravitational force of the earth may for example be modeled based on spherical harmonics (such model known as Earth Gravity Model or EGM) while gravitational forces of the sun and the moon may be modeled approximating sun and moon as point masses. The force caused by the solar radiation pressure may be modeled for example based on experimental observations. In an exemplary embodiment, the system model of motion of the at least one GNSS satellite may further take into account the orientation of the earth and/or the shadow (eclipse) of the earth. In particular the above forces (the corresponding accelerations) may be obtained as detailed in section 2.1 of the scientific article Juha Ala-Luhtala, Mari Seppänen, Simo Ali-Löytty, Robert Piché, and Henri Nurminen: "Estimation of initial state and model parameters for autonomous GNSS orbit prediction", published in "International Global Navigation Satellite Systems Society Symposium 2013 (IGNSS2013), July 2013".

An advantage of a system model of motion built based on any one or more of the above forces is that in particular gravitational forces acting on a satellite only depend on the position of the satellite. Therefore any necessary calculations based on such model may be performed by the at least one apparatus for example based only on said previous state of the at least one GNSS satellite. Such system model may further be advantageous in that based thereon, necessary calculations may be performed by the at least one apparatus using processors and memories available for mobile devices. While the solar radiation pressure may not only depend on the position of the satellite, corresponding data may be obtained by the at least one apparatus (for example from a corresponding server accessible via a network connection and/or the Internet) that may enable the at least one apparatus to perform corresponding calculations for the at least one GNSS satellite reliably for several months or even years. Such corresponding data may comprise one or more parameters e.g. representing physical characteristics of the satellite in question, e.g. its mass and/or dimensions.

Thus, in the exemplary embodiment, the system model of motion corresponds to at least one equation of motion obtained based on one or more of said forces. The system model of motion may in this embodiment thus be referred to as force model. It is to be understood that the at least one equation of motion may take into account further forces suitable for describing motion of the at least one GNSS satellite. Such equation of motion may describe the motion of the at least one GNSS satellite when moving along a corresponding orbit around the earth, whereby the orbit of the satellite is fully determined by the initial position (and/or velocity) of the at least one GNSS satellite, the initial position corresponding to an initial time. Such initial position and a corresponding timestamp representing the corresponding initial time may be obtained e.g. from assistance data or directly from received GNSS navigation data. Orbital positions (and/or velocities) at subsequent times of the at least one GNSS satellite may be obtained (estimated, calculated) by numerically integrating the equations of motion created using one or more of the above forces. For example, the at least one equation of motion may be implemented in suitable software stored at the at least one apparatus, the at least one apparatus thus being enabled to perform the numerical integration(s) to obtain the second estimate of the current state of the at least one GNSS satellite, in particular taking into account said previous state of the at least one GNSS satellite.

In an exemplary embodiment, the GNSS navigation data is obtained (e.g. received) at least partially from an assistance data server and/or from the at least one GNSS satellite.

As explained above, the GNSS navigation data may comprise at least ephemeris data and/or clock data. In particular said ephemeris data and/or said clock data may enable estimating the position of the at least one apparatus. As explained above, the at least one apparatus is configured to obtain said first estimate of the current state of the at least one GNSS satellite at least partially based on GNSS navigation data relating at least to the current state. Thereby, the current state may in particular comprise a current position of the at least one GNSS satellite and the at least one apparatus may be configured to obtain (estimate, calculate) that current position based on ephemeris data and/or clock data comprised by the GNSS navigation data relating to the current state of the at least one GNSS satellite.

In an exemplary embodiment, the GNSS navigation data may be obtained with assistance data that may assist obtaining (estimating, calculating) of positions, in particular of the current position, based on ephemeris data and/or clock data, in particular based on ephemeris data and/or clock data contained by the GNSS navigation data relating to the current state. As mentioned above, GNSS navigation data may be obtained as part of or as GNSS assistance data.

Thereby, for example the entire GNSS navigation data relating to the current state may be obtained (e.g. received) by the at least one apparatus from the at least one GNSS satellite or from an assistance data server. Further, only part of the GNSS navigation data relating to the current state may be obtained by the at least one apparatus from the at least one GNSS satellite while the other part of the GNSS navigation data may be obtained by the at least one apparatus from the assistance data server. For example, in particular ephemeris data and/or clock data may be obtained from the at least one GNSS satellite while further assistance data may be obtained from the assistance data server.

Likewise, in an exemplary embodiment, the estimate of the previous state of the at least one GNSS satellite is obtained at least partially from an assistance data server and/or from the at least one GNSS satellite.

In an exemplary embodiment, the estimated deviation of the second estimate of the current state of the at least one GNSS satellite from the first estimate of the current state of the at least one GNSS satellite is representative of a covariance related to the second estimate of the at least one GNSS satellite. In other words, the estimated deviation of the second state from the first state may additionally or alternatively be obtained based on a measure of the accuracy of the second estimate, e.g. based on the accuracy with which the estimate of the current state can be obtained based on the system model of motion.

In this exemplary embodiment, obtaining or causing obtaining the second estimate of the current state of the at least one GNSS satellite may in particular comprise employing or causing employing a filtering and/or smoothing algorithm, in particular a statistical estimation algorithm, based on the system model of motion and based on the GNSS navigation data relating to the current state. In other words, the obtaining may be based on a statistical approach taking into account the GNSS navigation data as observed or measured value. In particular in such case a measure of the accuracy of the second estimate such as the covariance may be well suited to represent a deviation between the second estimate and the first estimate.

While in one embodiment obtaining or causing obtaining the second estimate of the current state of the at least one GNSS satellite at least partially based on a system model of motion may at least comprise (e.g. numerically) integrating equations of motion obtained based on the above discussed forces, obtaining the second estimate may in an exemplary embodiment further or alternatively comprise obtaining the second estimate at least partially employing a statistical estimation or filtering/ smoothing algorithm based on the system model of motion and for example the previous state of the at least one GNSS satellite.

In particular when employing such statistical algorithm to obtain the second estimate of the current state of the at least one GNSS satellite, the estimated deviation of the second estimate from the first estimate may correspond to a measure of the accuracy of the obtained second estimate. An example of such measure of the accuracy may in an exemplary embodiment be a covariance of the second state. In other words, in an exemplary embodiment, the estimated deviation of the second estimate of the current state of the at least one GNSS satellite from the first estimate of the current state of the at least one GNSS satellite is representative of a covariance related to the second estimate of the at least one GNSS satellite.

Thus, in an exemplary embodiment, obtaining or causing obtaining the second estimate of the current state of the at least one GNSS satellite comprises employing or causing employing a filtering and/or smoothing algorithm. Examples of such filtering/smoothing algorithms include (but are not limited to) a Kalman filter; an extended Kalman filter, an unscented Kalman filter, and/or a cubature Kalman filter. As mentioned, the second estimate of the current state of the at least one GNSS satellite may for example be obtained using a mathematical statistical or probabilistic approach to estimate the current state of the at least one GNSS satellite e.g. recursively based on said previous state of the at least one GNSS satellite and the system model of motion of the at least one GNSS satellite.

In this exemplary embodiment, the employing the filtering/smoothing algorithm may comprise:

- determining or causing determining an a priori state relating to the current state of the at least one GNSS satellite at least partially based on the system model of motion of the at least one GNSS satellite and the estimate of the previous state;
- determining or causing determining the current state of the at least one GNSS satellite based on the a priori state relating to the current state of the at least one GNSS satellite and the first estimate of the current state of the at least one GNSS satellite at least partially based on the GNSS navigation data.

In other words, employing the filtering algorithm in this exemplary embodiment essentially corresponds to an execution of a two-step process according to which in a first step, an intermediate state (e.g. an a priori state of the current state) is determined based on a previous state (said previous or initial state) using only the system model, e.g. without taking into account further observation data such as the obtained GNSS navigation data relating to the current state. In this step, said intermediate state may e.g. be obtained by applying equations of motions derived from said forces to the previous state (the previous position of the at least one GNSS satellite and/or the previous velocity of the at least one GNSS satellite).

The second step may then be understood as a step of weighting the determined intermediate state by the obtained GNSS navigation data relating to the current state. In other words, the a priori state is "corrected" based on the measurement to obtain a more accurate estimate. In this way, the second step obtains an a posteriori state of the current state. In other words, said second step may be understood as a step of weighting the determined intermediate state by observation data, e.g. the GNSS navigation data relating to the current state, e.g. an actual position and/or an actual velocity of the at least one GNSS satellite.

In an exemplary embodiment, the filtering algorithm comprises at least one of:

- a Monte Carlo algorithm;
- a Bayes filter;
- a Kalman filter;
- an extended Kalman filter;
- an unscented Kalman filter; and/or
- a cubature Kalman filter.

Thereby, examples of a Monte Carlo algorithm include (but are not limited to) a particle filter or a Sequential Monte Carlo (SMC) method. Such Monte Carlo algorithm may be used for solving filtering problems, e.g. problems where an internal state in a dynamical system is to be estimated. The Bayes filter is in general terms a mathematical algorithm implementing a general probabilistic approach for estimating an unknown probability density function recursively over time using incoming measurements and a mathematical process model. The Bayes filter may thus be suitable for estimating one or more states (corresponding to the unknown probability density function) of the at least one GNSS satellite using GNSS navigation data relating to the one or more states, e.g. GNSS navigation data relating to said previous state, (the GNSS navigation data corresponding to the incoming measurements) and the system model of motion of the at least one GNSS satellite (corresponding to the mathematical process model).

A specific form of the Bayes filter is the Kalman filter (also known as linear quadratic estimation, LQE), which similarly calculates estimates of true values of states (e.g. states of the at least one GNSS satellite including e.g. position and velocity) recursively over time using incoming measurements (e.g. GNSS navigation data respectively corresponding to the states) and a mathematical process model (e.g. the system model of motion of the at least one GNSS satellite). While the Kalman filter may suitably be employed, the extended Kalman filter, the unscented Kalman filter or the cubature Kalman filter may be chosen to be used in particular to cope with nonlinearities of the system model of motion of the at least one GNSS satellite. In an exemplary embodiment, filtering/smoothing algorithms that may be employed in addition or alternatively include a statistically linearized filter, a Gaussian filter and/or a Gauss-Hermite Kalman filter. Employable filters and/or corresponding information thereon may be derived e.g. from the book by Simo Särkkä "Simo Särkkä (2013). Bayesian Filtering and Smoothing. Cambridge University Press".

According to an exemplary embodiment of the invention, obtaining or causing obtaining the second estimate of the current state of the at least one GNSS satellite comprises employing or causing employing a Kalman filter, in particular an extended Kalman filter. In general, the Kalman filter assumes that a state at time $k$ (e.g. said current state) is evolved from a state at time $k-1$ (e.g. said previous or initial state). As mentioned, the Kalman filter employs a two-step process, where a first step may be referred to as a prediction step and a second step may be referred to as an update step. Employing the algorithm to obtain e.g. a sequence of orbital positions of the at least one GNSS satellite, the two steps may alternate, with the prediction step advancing a certain state until the next scheduled observation (reception of GNSS navigation data relating to the certain state), and the update incorporating the observation.

In the following, a simplified and non-limiting example of applying a Kalman filter is given to exemplarily illustrate the principle application.

The Kalman filter model assumes that a true state at time k is evolved from a state at $(k-1)$ according to

$$\mathbf{x}_k = \mathbf{F}_k\,\mathbf{x}_{k-1} + \mathbf{B}_k\,\mathbf{u}_k + \mathbf{w}_k,$$

whereby $\mathbf{F}_k$ is a matrix representing a state-transition model, $\mathbf{B}_k$ is a matrix representing a control-input model, $\mathbf{u}_k$ is a control vector and $\mathbf{w}_k$ is the process noise, which may correspond to a zero mean multivariate normal distribution with covariance $\mathbf{Q}_k$. This true state may be normally distributed corresponding to $\mathbf{w}_k$.

At time $k$, an observation or measurement $\mathbf{z}_k$ of the true state $\mathbf{x}_k$ may be expressed as

$$\mathbf{z}_k = \mathbf{H}_k\,\mathbf{x}_k + \mathbf{v}_k,$$

where $\mathbf{H}_k$ is a matrix representing an observation model which maps the true state space into the observed space and $\mathbf{v}_k$ is the observation noise which may be assumed to be zero mean Gaussian white noise with covariance $\mathbf{R}_k$. The observation $\mathbf{z}_k$ of the true state $\mathbf{x}_k$ may be normally distributed according to $\mathbf{v}_k$.

Using the Kalman filter, an estimate $\hat{\mathbf{x}}_{k|k}$ of the true state $\mathbf{x}_k$ can be determined, whereby $\hat{\mathbf{x}}_{k|k}$ is the a posteriori state estimate at time $k$ given observations up to and including $k$. $\mathbf{P}_{k|k}$ is the corresponding a posteriori error covariance matrix, i.e. a measure of the estimated accuracy of the state estimate. The Kalman filter can be employed using a predict step and an update step. In the predict step, a state estimate from the previous time step ($\hat{\mathbf{x}}_{k-1|k-1}$) is used to produce an estimate of the current time step, this current time step then being referred to as a priori state estimate ($\hat{\mathbf{x}}_{k|k-1}$). The current a priori time step is combined with a current observation, this improved state than being referred to as a posteriori state estimate ($\hat{\mathbf{x}}_{k|k}$).

The a priori state estimate $\hat{\mathbf{x}}_{k|k-1}$ may generally be written as

$$\hat{\mathbf{x}}_{k|k-1} = \mathbf{F}_k\,\hat{\mathbf{x}}_{k-1|k-1} + \mathbf{B}_k\,\mathbf{u}_k,$$

where

> $\mathbf{F}_k$ is the above mentioned state transition model which is applied to the previous (a posteriori) state estimate $\hat{\mathbf{x}}_{k-1|k-1}$; and
> $\mathbf{B}_k$ is the above mentioned control-input model which is applied to the control vector $\mathbf{u}_k$.

It is noted that in an exemplary embodiment, the terms $\mathbf{B}_k$ and $\mathbf{u}_k$ may be set to zero due to the absence of a control-input model or control vector.

Given this, a predicted a priori error covariance may be written as

$$\mathbf{P}_{k|k-1} = \mathbf{F}_k\,\mathbf{P}_{k-1|k-1}\,\mathbf{F}_k^{\mathsf{T}} + \mathbf{Q}_k.$$

In case of the Kalman filter, the covariance of the process noise [denoted $\mathbf{Q}_k$ according to the above notation) may be determined based on a force model, i.e. based on the system model of motion. The more accurate the force model, the smaller the process noise becomes and vice-versa.

In the update step, observation or measurement noise may be taken into account in form of its covariance $\mathbf{R}_k$. Using the covariance $\mathbf{R}_k$, an observation or measurement model $\mathbf{H}_k$ and the predicted a priori error covariance $\mathbf{P}_{k|k-1}$, the innovation or pre-fit residual covariance can be derived as

$$\mathbf{S}_k = \mathbf{H}_k\,\mathbf{P}_{k|k-1}\,\mathbf{H}_k^{\mathsf{T}} + \mathbf{R}_k.$$

Using the innovation covariance $\mathbf{S}_k$, the observation model $\mathbf{H}_k$ and the predicted a priori error covariance $\mathbf{P}_{k|k-1}$ as input, an optimal Kalman gain may be written as

$$\mathbf{K}_k = \mathbf{P}_{k|k-1}\,\mathbf{H}_k^{\mathsf{T}}\,\mathbf{S}_k^{-1},$$

such that an updated (a posteriori) estimate $\hat{\mathbf{x}}_{k|k}$ of the state $\mathbf{x}_k$ may be obtained as

$$\hat{\mathbf{x}}_{k|k} = \hat{\mathbf{x}}_{k|k\text{-}1} + \mathbf{K}_k\tilde{\mathbf{y}}_k,$$

where $\tilde{\mathbf{y}}_k$ is the innovation, i.e. the difference between the above mentioned observation $\mathbf{z}_k$ of $\mathbf{x}_k$ at time $k$ and the optimal forecast of that value based on information available prior to time $k$:

$$\tilde{\mathbf{y}}_k = \mathbf{z}_k \text{ - } \mathbf{H}_k\,\hat{\mathbf{x}}_{k|k\text{-}1}.$$

As rioted above, since the observed value $\mathbf{z}_k$ corresponds to the measurement or observation from the true state (not the estimated state), $\mathbf{z}_k$ is normally distributed according to the normally distributed observation noise.

Likewise, an updated a posteriori estimate of the covariance $\mathbf{P}_{k|k}$ may be obtained as

$$\mathbf{P}_{k|k} = (\mathbf{I} \text{ - } \mathbf{K}_k\,\mathbf{H}_k)\mathbf{P}_{k|k\text{-}1},$$

.

where $\mathbf{I}$ is the identity matrix.

Employing a Kalman filter for obtaining or causing obtaining the second estimate of the current state of the at least one GNSS satellite, the state-transition model $\mathbf{F}_k$ may be created or set based on or may correspond to the system model of motion, in particular the system model of motion obtained based on the above mentioned gravitational forces and the force due to the sun's radiation pressure. The measurement model or observation model $\mathbf{H}_k$ may be created taking into account nominal accuracies of GNSS navigation data, in particular taking into account a nominal accuracy of the GNSS navigation data relating to the previous state. It is noted that the accuracy relates to a difference in position calculated from received GNSS navigation data to a true position. The corresponding covariance $\mathbf{R}_k$ of the observation or measurement noise may then be created or set based thereon. For example, the covariance $\mathbf{R}_k$ of the observation or measurement noise may be estimated taking into account an observed accuracy of an orbit in GNSS navigation data or for example in case of GPS, based on a URA index included in received GPS navigation data. This index gives an estimate of the data accuracy (in this respect, reference is made e.g. to section 20.3.3.3.1.3 of GPS Interface specification document (IS-GPS-200K) currently available via https://www.gps.gov/technical/icwg/IS-GPS-200K.pdf. The covariance $\mathbf{Q}_k$ of the process noise may be suitably set in advance, e.g. with the process noise $\mathbf{w}_k$ being set based on a zero mean multivariate normal distribution. The control input model $\mathbf{B}_k$ may be added if necessary or considered suitable or can be omitted. A first estimate $\mathbf{x}_0$ may be derived for employing the Kalman filter based on a first measurement In a similar way, an initial covariance $\mathbf{P}_0$ may be set with the first estimate $\mathbf{x}_0$.

While the above non-limiting example of applying a Kalman filter exemplarily illustrates the principle application, it is noted that in view of non-linearity of the underlying system, results with higher precision may be achieved when applying e.g. an extended or unscented Kalman filter. An example application may be derived e.g. based on the book by Simo Särkkä "Simo Särkkä (2013). Bayesian Filtering and Smoothing. Cambridge University Press", e.g. using algorithm 5.4 of this book.

A further detailed example of applying an extended Kalman filter for obtaining or causing obtaining the second estimate of the current state of the at least one GNSS satellite is disclosed in the above mentioned scientific article

Juha Ala-Luhtala, Mari Seppänen, Simo Ali-Löytty, Robert Piché, and Henri Nurminen: "Estimation of initial state and model parameters for autonomous GNSS orbit prediction", published in "International Global Navigation Satellite Systems Society Symposium 2013 (IGNSS2013), July 2013".

As mentioned, in particular when employing such statistical algorithm to obtain the second estimate of the current state of the at least one GNSS satellite, the estimated deviation of the second estimate from the first estimate may correspond to a covariance of the second estimate of the current state, the covariance being a suitable measure of the accuracy of the obtained second estimate.

Employing a Kalman filter for obtaining or causing obtaining the second estimate of the current state of the at least one GNSS satellite, the method according to the invention may in such exemplary embodiment thus comprise a step of:

- determining or causing determining the covariance related to the second estimate of the current state of the at least one GNSS satellite based on an accuracy of the GNSS navigation data.

Referring to the above example, said covariance may correspond to the posteriori estimate of the covariance $\mathbf{P}_{k|k}$.

As mentioned above, in an alternative or additional approach, said at least one equation of motion generated based on the above discussed forces acting on the at least one GNSS satellite may be directly used at the at least one apparatus to obtain the second estimate of the current state of the at least one GNSS satellite. For example, in such case, the at least one equation of motion may be (in particular numerically) integrated at the at least one apparatus to obtain the second estimate of the current state (e.g. a current position and/or a current velocity) of the at least one GNSS satellite. For example, such numerical integration of the at least one integration of motion may take into account said previous or initial state of the at least one GNSS satellite. In this way, estimates (second estimates) of states at certain instances of time may be obtained directly from the system model of motion in correspondence with estimates (first estimates) of corresponding states at corresponding instances of time obtained based on GNSS navigation data relating to said corresponding states (for example received at the at least one apparatus for said corresponding states). In this case, the estimated deviation may correspond to at least one respective difference between a first estimate of a state and a second estimate of a state, e.g. between a first position (and/or a first velocity) comprised by said first estimate and a second position (and/or a second velocity) comprised by said second estimate.

In other words, in an exemplary embodiment, the first estimate of the current state of the at least one GNSS satellite comprises a first estimate of an orbital position of the at least one GNSS satellite at a current time and wherein the second estimate of the current state comprises a second estimate of the orbital position of the at least one GNSS satellite at the current time, and wherein the estimated deviation is representative of a difference between the first estimate of the orbital position and the second estimate of the orbital position of the at least one GNSS satellite at the current time.

In an exemplary embodiment, obtaining or causing obtaining the second estimate of the current state of the at least one GNSS satellite comprises:

- determining or causing determining the second estimate of the current state of the at least one GNSS satellite based on at least one equation of motion, the at least one equation of motion being at least partially based on the system model of motion of the at least one GNSS satellite.

As mentioned above, the second estimate of the current state of the at least one GNSS satellite may be obtained by directly employing the at least one equation of motion, the equation of motion being at least partially based on the system model of motion of the at least one GNSS satellite. Thereby, as mentioned above, the system model of motion of the at least one GNSS satellite corresponds to at least one equation of motion obtained based on at least one of:

- a gravitational force caused by the sun;
- a gravitational force caused by the earth;
- a gravitational force caused by the moon; or
- a force caused by the solar radiation pressure.

Directly employing the at least one equation of motion may for example correspond to numerically integrating at least one equation of motion implemented for example in form of software stored at the at least one apparatus. In other words, determining or causing determining the second estimate of the current state of the at least one GNSS satellite based on at least one equation of motion, the at least one equation of motion being at least partially based on the system model of motion of the at least one GNSS satellite may be understood to mean integrating or causing integrating at least one equation of motion to obtain the second estimate of the current state of the at least one GNSS satellite, the at least one equation of motion being at least partially based on the system model of motion of the at least one GNSS satellite.

In an exemplary embodiment, said GNSS navigation data relating to the current state comprise at least one of ephemeris data of said at least one GNSS satellite and clock data of said at least one GNSS satellite, wherein the ephemeris data represent one or more respective parameter values of one or more orbit parameters enabling determining the first estimate of the orbital position of the at least one GNSS satellite at the current time. In other words, the at least one apparatus may for example be configured to obtain (e.g. receive) the GNSS navigation data relating to the current state from the at least one GNSS satellite and state or from said server (e.g. from an assistance data server). The at least one apparatus may further be configured to extract ephemeris data and clock data of the at least one GNSS satellite from the obtained GNSS navigation data relating to the current state. Based thereon (e.g. based on said respective parameter values of one or more orbit parameters), the at least one apparatus may then be configured to estimate (e.g. calculate) the first estimate of the orbital position of the at least one GNSS satellite at the current time to which the obtained GNSS navigation data relates. In this way, the at least one apparatus may be configured to directly obtain the first estimate of the current state of the at least one GNSS satellite from the obtained GNSS navigation data relating to the current state of the at least one GNSS satellite.

As mentioned above, in an exemplary embodiment, the at least one apparatus may be configured to determine the obtained GNSS navigation data relating to the current state of the at least one GNSS satellite to be potentially manipulated for example by comparing the estimated deviation of the second estimate of the current state from the first estimate of the current state to a threshold value.

In an exemplary embodiment, the method may further comprise one or more of the following steps, if it is determined that the GNSS navigation data relating to the current state are potentially manipulated:

- identifying or causing of identifying said GNSS navigation data as potentially manipulated;
- rejecting or causing rejecting said GNSS navigation data;
- if a position of a mobile device is estimated at least partially based on said GNSS navigation data, identifying or causing of identifying said position estimate as potentially manipulated;
- associating or causing associating said GNSS navigation data with a manipulation risk level.

Identifying the GNSS navigation data relating to the current state as potentially manipulated may be understood to mean that manipulation data identifying the GNSS navigation data relating to the current state as potentially manipulated are hold available by the at least one apparatus, for example by being stored in a memory of the at least one apparatus. Causing of identifying the GNSS navigation data relating to the current state as potentially manipulated may be understood to mean that the at least one apparatus provides manipulation data to a remote device like a server causing the remote device to identify the GNSS navigation data relating to the current state as potentially manipulated. This may have the effect that other apparatuses (for example other mobile devices) receiving the GNSS navigation data relating to the current state may be informed (e.g. by the remote device) that the GNSS navigation data relating to the current state are potentially manipulated.

Rejecting the GNSS navigation data relating to the current state may be understood to mean that the rejected GNSS navigation data relating to the current state are not used for estimating (e.g. determining a position estimate of) a position of the at least one apparatus. This has the effect that only GNSS navigation data which are considered to be trustworthy (i.e. not potentially manipulated) are used for estimating (e.g. determining a position estimate of) a position of the at least one apparatus.

Identifying a position estimate as potentially manipulated may be understood to mean that manipulation data identifying the position estimate as potentially manipulated are hold available by the at least one apparatus, for example by being stored in a memory of the at least one apparatus. For example, the manipulation data may be stored together or may be part of position data containing a representation of the position estimate (e.g. in the form of positioning coordinates). By identifying the position estimate as potentially manipulated, the potential manipulation can be considered when further processing the position estimate. For example, business services or applications which rely on trustworthy positioning like car sharing services may not use position estimates identified as potentially manipulated. Other business services or applications may however consider position estimates identified as potentially manipulated.

Associating the GNSS navigation data relating to the current state with a manipulation risk level may be understood to mean that manipulation risk level data representing a manipulation risk level are hold available by the at least one apparatus, for example by being stored in a memory of the at least one apparatus. A manipulation risk level may be understood to be indicative of a probability that the GNSS navigation data relating to the current state are manipulated. For example, a manipulation risk level may represent a percentage indicative of a probability that the GNSS navigation data relating to the current state are manipulated. The probability that the GNSS navigation data relating to the current state are manipulated may for example be determined based on the difference(s) (e.g. the value of the difference(s) and/or the number of difference(s)) between the first estimate of the current state of the at least one GNSS satellite and the second estimate of the current state of the at least one GNSS satellite.

According to an exemplary embodiment of the invention, the method further comprises:

- observing one or more GNSS signals at a position of the at least one apparatus;
- estimating said position of the at least one apparatus at least partially based on said GNSS signals and the GNSS navigation data relating to the current state.

Observing one or more GNSS signals at the position of the at least one apparatus may for example be understood to mean that the one or more GNSS signals are received by the at least one apparatus when scanning for observable GNSS signals at this position.

Estimating said position of the at least one apparatus at least partially based on said GNSS signals and the GNSS navigation data relating to the current state may be understood to mean that the estimation depends on the GNSS signals and the GNSS navigation data relating to the current state. It is however to be understood that the estimating may optionally depend on further data or information.

Moreover, estimating the position of the at least one apparatus may be understood to mean that a position estimate of the position of the at least one apparatus is determined at least partially based on the GNSS signals and the GNSS navigation data relating to the current state. Therein, the estimating or determining may be performed according to a predetermined GNSS positioning algorithm. To give a non-limiting example, such a GNSS positioning algorithm may comprise at least one of the following steps:

- determining, for each of the one or more GNSS signals, a respective pseudorange between the at least one apparatus and the respective GNSS satellite broadcasting the respective GNSS signal of the one or more GNSS signals at least partially based on the respective GNSS signal of the one or more GNSS signals;
- determining, for at least one of the GNSS satellite(s) broadcasting the one or more GNSS signals, a respective orbital position (e.g. at the time-of-transmission) at least partially based on the GNSS navigation data relating to the current state (e.g. at least partially based on the ephemeris data contained by the second GNSS navigation data);
- determining the position estimate of the position of the at least one apparatus at least partially based on the determined pseudorange(s) and the determined orbital position(s), for example by solving a GNSS observation equation system at least partially based on the determined pseudorange(s) and the determined orbital position(s) (e.g. a minimum of four GNSS signals observed by the at least one apparatus may be necessary to solve such a GNSS observation equation system).

The position estimate of the position of the at least one apparatus may be understood to be a representation of the position estimate obtained as a result of the determining as disclosed above. It is however to be understood that the position estimate of the position of the at least one apparatus may deviate from the real position of the at least one apparatus (e.g. due to uncertainties like measurement errors or due to manipulation of the GNSS navigation data).

As disclosed above, it may be necessary that the at least one apparatus observes at least four GNSS satellites to enable the at least one apparatus to estimate its position based on the observed GNSS signals and (e.g. temporal valid) GNSS navigation data of these at least four GNSS satellites

It is to be understood that the presentation of the invention in this section is merely by way of examples and non-limiting.

In an exemplary embodiment, the at least one apparatus is or comprises a mobile device, a module for a mobile device, a server, or a module for a server.

In a specific, non-limiting example, a method in accordance with an embodiment of the invention may be described as follows:
It is proposed to detect potentially false GNSS navigation data obtained by the at least one apparatus (e.g. by the mobile device) for example from a received radio signal (e.g. a GNSS signal broadcasted from at least one corresponding GNSS satellite). Such detection of false data, i.e. potentially manipulated data, may be performed individually for GNSS data received from an individual satellite, and may exclusively be based on contents of such received GNSS navigation data. In other words the proposed method may be independent of data received from other sources or the location of the at least one apparatus. In a specific, non-limiting example a method may comprise:

1) Receiving assistance data for a specific satellite from a server,
2) Calculating positions of at least one GNSS satellite based on received GNSS navigation data at given points in time thus generating an observation orbit for the at least one GNSS satellite,
3) Estimating a reference orbit to estimate a position and a velocity for the satellite using a built-in force model and statistical inference (e.g. using a Kalman filter),
4) Carry out a validation, e.g. by using confidence of estimated position and velocity (e.g. using a covariance) or by generating a new orbit for the satellite (e.g. based on received GNSS navigation data) and comparing it to estimated reference orbit (e.g. estimated based on solving the equations of motion).

In a specific, non-limiting example a method may comprise: if the detection identifies possible spoofing:

- Create a warning indication (binary flag etc.) to the GNSS chipset or positioning engine (PE) to avoid using a signal of given satellite(s)
- Estimate the risk level (e.g. Trust Index) of the possible spoofing based on the magnitude and number of the detection
- Delete the received broadcast GNSS navigation data of satellites for which the validation did not succeed

The following provides a specific non-limiting description of certain aspects of the present invention.

A method in accordance with an aspect of the invention, e.g. carried out by the at least one apparatus, detects and mitigates a GNSS navigation data spoofing attack by using a force model which may be built-in, e.g. as software implemented at, the at least one apparatus to validate the orbit described by the received data. Positions of the at least one GNSS satellite at specific times can be calculated from received GNSS navigation data. These specific times (e.g. including the current time and the previous time) can be for example every 15 minutes during the lifetime of the satellite. The force model can be used to create or can correspond to a system model (said system model of motion) for position and velocity of the satellite and a measurement model can be created based on nominal accuracies of the GNSS navigation data. In particular an extended Kalman filter can then be used to infer the position and velocity (an example of the second estimate of the current state) of the satellite at given point in time (an example of the current time). A detailed description of state estimation can be found for example in the scientific article
Juha Ala-Luhtala, Mari Seppänen, Simo Ali-Löytty, Robert Piche, and Henri Nurminen: "Estimation of initial state and model parameters for autonomous GNSS orbit prediction", published in "International Global Navigation Satellite Systems Society Symposium 2013 (IGNSS2013), July 2013".

Once position and velocity have been estimated, reliability of the estimate can be assessed from covariance matrix which may be calculated as a byproduct of the Kalman filter and unreliable estimates may be an indication of spoofed GNSS navigation data. Another or alternative approach is to numerically integrate equations of motion created using the force model to calculate positions at the same time instants as those calculated from the received GNSS navigation data. Because the orbit of the satellite is fully determined by initial position and velocity, if the two orbits don't coincide with expected accuracy, this may be an indication of a spoofing attack.

Suitable spoofing detection logic implementing a method in accordance with the above described aspect of the present invention and any embodiments thereof may be implemented in a GNSS chipset of a mobile device and/or outside of the chipset in a software module of the mobile device that observes the GNSS navigation data and carries out calculations related to methods as described above. The software module may be implemented in a GNSS chipset driver of a mobile device, in the operating system of the mobile device or in an application installed at the mobile device using GNSS positions.

It is to be understood that the presentation of the invention in this section is merely by way of examples and non-limiting.

Other features of the invention will become apparent from the following detailed description considered in conjunction with the accompanying figures. It is to be understood, however, that the figures are designed solely for purposes of illustration and not as a definition of the limits of the invention, for which reference should be made to the appended claims. It should be further understood that the figures are not drawn to scale and that they are merely intended to conceptually illustrate the structures and procedures described herein,

**BRIEF DESCRIPTION OF THE FIGURES**

Fig. 1     is a block diagram of an exemplary embodiment of a system according to the invention;

Fig. 2     is a block diagram of an exemplary embodiment of a mobile device according to the invention;

Fig. 3     is a flow chart illustrating an exemplary embodiment of a method according to the invention;

Fig. 4a    illustrates an exemplary observation orbit (based on true GNSS navigation data) and an exemplary reference orbit of the at least one GNSS satellite;

Fig. 4b    illustrates an exemplary observation orbit (based on falsified GNSS navigation data) and an exemplary reference orbit of the at least one GNSS satellite; and

Fig. 5     is a schematic illustration of examples of tangible and non-transitory storage media according to the invention.

**DETAILED DESCRIPTION OF THE FIGURES**

The following description serves to deepen the understanding of the present invention and shall be understood to complement and be read together with the description of example embodiments of the invention as provided in the above SUMMARY section of this specification.

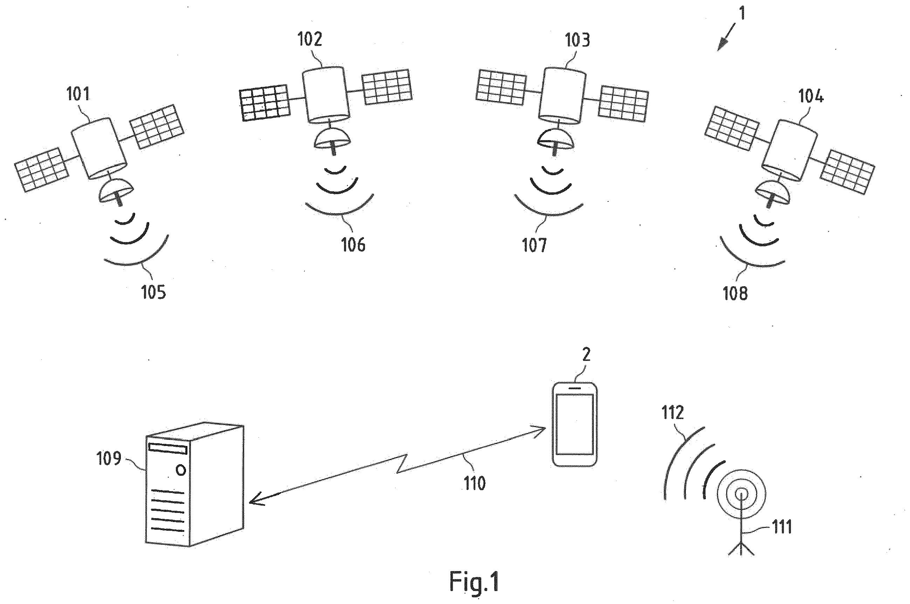

Fig. 1 is a schematic high-level block diagram of a system 1 according to an exemplary aspect of the invention. Without limiting the scope of the invention, it is assumed in the following that system 1 is part of or is a GNSS based positioning solution.

For illustrative purposes, Fig. 1 shows four GNSS satellites 101 to 104 of a GNSS system like the Galileo system or the GPS system. Each GNSS satellite of GNSS satellites 101 to 104 (e.g. periodically or repeatedly or continuously) broadcasts a respective GNSS signal of GNSS signals 105 to 108 conveying a respective message containing respective GNSS navigation data. In the following, it is assumed that the respective GNSS navigation data contain ephemeris data that enable determining an orbital position of the respective GNSS satellite at any given time within a limited time period (for example, 30 to 120 minutes) and clock data that enable determining a deviation of a clock of the respective GNSS satellite from a GNSS system time at any given time within a limited time period. As disclosed above, an example of such a message is a Galileo F/NAV message as specified by the Galileo open service specifications or a GPS navigation message as specified by the GPS specifications. Accordingly, ephemeris data may represent or contain ephemeris parameters as specified by the Galileo open service specifications or the GPS specifications; and the clock data may represent or contain clock correction parameters as specified by the Galileo open service specifications or the GPS specifications.

As disclosed in more detail above, containing at least said ephemeris data and said clock data relating to a certain time (e.g. one or more points in a time interval, e.g. in an interval corresponding to a lifetime of corresponding GNSS navigation data), the GNSS navigation data relating to the certain time included in a GNSS signal broadcasted by a respective GNSS satellite enables the at least one apparatus for obtaining or causing obtaining the first estimate of a certain state (a state relating to the certain time) of the at least one GNSS satellite. Thereby, the state of the at least one GNSS satellite may comprise a timestamp indicative of the certain time, a position of the at least one GNSS satellite at the certain time and/or a velocity of the at least one GNSS satellite at the certain time. As also mentioned above, while the GNSS navigation data may be included in a GNSS signal broadcasted by a respective GNSS satellite, GNSS navigation data may additionally or alternatively be included in a message from a server such as an assistance data server.

As further disclosed above, in an exemplary embodiment, the at least one apparatus is a mobile device. Without limiting the scope of the present invention, in the following description of the figures it is referred to such mobile device representative of the at least one apparatus (which may in particular be a mobile device or a module of the mobile device or one or more processors of the mobile device, the module or the one or more processors configured to cause any of the disclosed actions performed by the mobile device).

Referring back to Fig. 1, system 1 comprises a mobile device 2 and a server 109 which may be in communication with each other via communication path 110. Communication path 110 may be a direct or indirect communication path. For example, communication path 110 may comprise one or more hops, for example one or more communication links or communication connections.

Thereby, in accordance with exemplary embodiments, communication path 110 may correspond to a communication path or link in a wireless communication network, in particular a terrestrial wireless communication network like a Wireless Local Area Network (WLAN) or a cellular network. WLAN is for example specified by the standards of the IEEE 802.11 family (http://www.ieee.org/). A cellular network may for example be a mobile phone network like a 2G/3G/4G/5G cellular communication network. The 2G/3G/4G/5G cellular radio communication standards are developed by the 3GPP and presently available under http://www.3gpp.org/. A wireless connection may further include a Device-to-Device (D2D) communication path (e.g. involving vehicles, mobile devices, Road Side Units (RSU) or IOT devices).

Further, in addition or alternatively, in accordance with an exemplary embodiment, communication path 110 may correspond to a communication path or link in a wired communication network employing wire-based communication technology and may correspond to a telephone network connection, a cable television connection, an internet connection, a fiber-optic connection or an electromagnetic waveguide connection.

In the following, it is assumed that communication path 110 is a wireless communication connection in a cellular communication network like a 2G/3G/4G/5G cellular communication network. It is however to be understood that the invention is not limited to this.

System 1 is not limited to a single server 109, but may optionally comprise a plurality of servers (e.g. forming a server cloud). Accordingly, server 109 may be part of such a plurality of servers (e.g. a server cloud) or may be represented by such a plurality of servers (e.g. a server cloud).

Server 109 may be part of a cellular communication network and may provide mobile devices of this cellular communication network with GNSS navigation data of at least one of GNSS satellites 101 to 104 as part of or as GNSS assistance data. In particular, these GNSS navigation data may be provided by the server as part of or as GNSS assistance data according to an assisted GNSS based positioning solution like assisted GPS or assisted Galileo. An example of such an assisted GNSS based positioning solution is assisted Global Navigation Satellite System (A-GNSS) as specified by the 3GPP. For example, server 109 may provide GNSS navigation data of at least one of GNSS satellites 101 to 104 as part of or as GNSS assistance data by transmitting the GNSS assistance data via wireless communication path 110 to mobile device 2.

Mobile device 2 may support the GNSS based positioning solution of system 1. This may be understood to mean that mobile device 2 is configured to estimate its position (e.g. determine a position estimate of its position) at least partially based on GNSS signals 105 to 108 observed at this position and valid GNSS navigation data of GNSS satellites 101 to 104.

Since the GNSS navigation data are crucial for the GNSS based positioning solution and may be valid only for a limited time period, the GNSS navigation data need to be updated at regular intervals. This may be exploited by an attacker by installing a spoofing device 111 in a certain area which broadcasts a spoofed GNSS signal 112. For example, spoofed GNSS signal 112 may be falsified such that it resembles GNSS signal 105 broadcast by GNSS satellite 101, but spoofed GNSS signal 112 may convey a message containing manipulated GNSS navigation data, for example to cause mobile device 2 to estimate its position to be somewhere other than it actually is. This threat may be mitigated by the disclosed method.

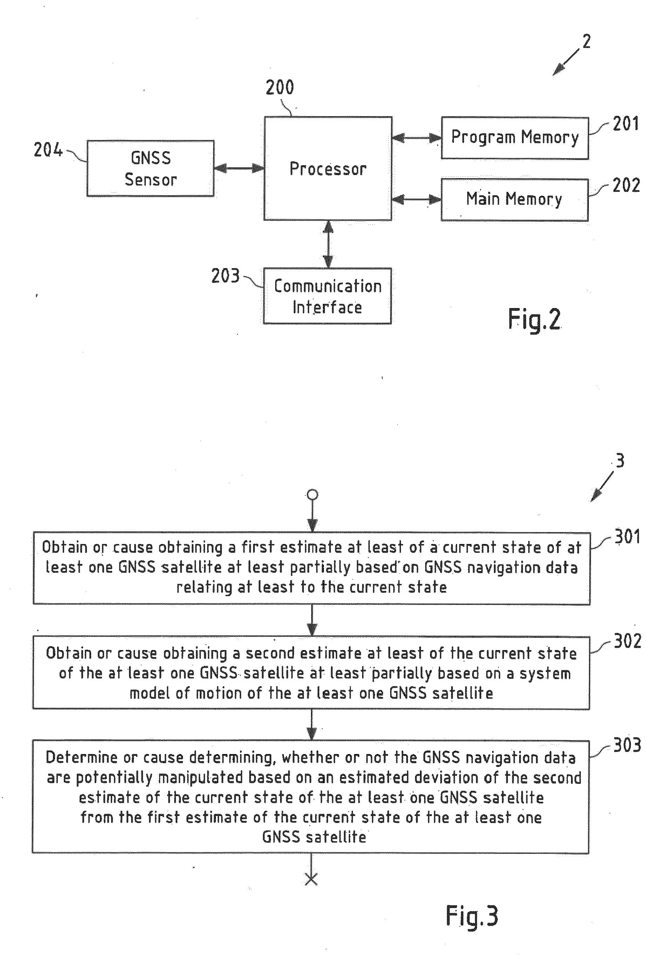

Fig. 2 is a block diagram of an exemplary embodiment of mobile device 2 according to the invention. In the following, it is assumed that mobile device 2 of Fig. 1 corresponds to this mobile device 2.

Mobile device 2 comprises a processor 200. Processor 200 may represent a single processor or two or more processors, which are for instance at least partially coupled, for instance via a bus. Processor 200 executes a computer program code stored in program memory 201 (e.g. computer program code causing mobile device 2 to perform any one embodiment of the disclosed method (e.g. the steps of any one embodiment of the disclosed method) or a part thereof (e.g. at least some steps of any one embodiment of the disclosed method) (as for instance further described below with reference to Fig. 3), when executed on processor 200), and interfaces with a main memory 202. Program memory 201 may also contain an operating system for processor 200 and further data like GNSS navigation data (e.g. the GNSS navigation data relating to the current state and/or the GNSS navigation data relating to the previous state). Some or all of memories 201 and 202 may also be included into processor 200. One of or both of memories 201 and 202 may be fixedly connected to processor 200 or at least partially removable from processor 200, for example in the form of a memory card or stick.

A program memory (e.g. program memory 201) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 202) may for example be a volatile memory. It may for example be a DRAM memory, to give non-limiting example. It may for instance be used as a working memory for a processor (e.g. processor 200) when executing an operating system and/or programs.

Processor 200 further controls a wireless communication interface 203 configured for communicating via a cellular network (e.g. to transmit and receive cellular radio signals). For example, wireless communication interface 203 may be or may comprise a 2G/3G/4G/5G radio transceiver. Mobile device 2 may use wireless communication interface 203 to receive GNSS navigation data as part of or as GNSS assistance data from server 109 of system 1 (e.g. via wireless communication path 110).

Moreover, processor 200 controls a GNSS sensor 204 configured for receiving GNSS signals (e.g. GNSS signals 105 to 108 broadcasted by GNSS satellites 101 to 104 of Fig. 1). GNSS sensor 204 is configured for (e.g. periodically or repeatedly) scanning for observable GNSS signals (e.g. GNSS signals 105 to 108 broadcasted by GNSS satellites 101 to 104 of Fig. 1). Thereby, a respective GNSS signal may be understood to be observable if the respective GNSS signal is receivable with a minimum quality (e.g. a minimum quality enabling a carrier locking and code locking of the respective observed GNSS signal) by GNSS sensor 204.

GNSS sensor 204 enables mobile device 2 to receive GNSS navigation data contained in a message conveyed in an observed GNSS signal. To this end, GNSS sensor 204 may be configured for extracting the GNSS navigation data from the received or observed GNSS signal.

Moreover, GNSS sensor 204 enables mobile device 2 to estimate its position based on GNSS signals observed when scanning for observable GNSS signals at this position. For example, GNSS sensor 204 may be configured for providing processor 200 with data necessary for determining a position estimate of the position of mobile device 2. To this end, GNSS sensor 204 may be configured for determining, for each of the observed GNSS signals, respective GNSS observation data relating to the observation of the respective GNSS signal by GNSS sensor 204 which enable determining a pseudorange between the mobile device and the respective GNSS satellite broadcasting the respective observed GNSS signal.

It is to be understood that any computer program code required for receiving and processing received GNSS signals may be stored in an own memory of GNSS sensor 204 and executed by an own processor of GNSS sensor 204 or it may be stored for example in program memory 201 and executed for example by processor 200.

The components 201 to 204 of mobile device 2 may for instance be connected with processor 200 by means of one or more serial and/or parallel busses.

It is to be understood that mobile device 2 may comprise various other components like a user interface for receiving user input.

Fig. 3 is a flow chart 3 illustrating an exemplary embodiment of a method according to the invention. Without limiting the scope of the invention, it is assumed in the following that mobile device 2 as disclosed above with respect to system 1 of Fig. 1 performs the steps of flow chart 3. Moreover, it is assumed in the following that the respective GNSS navigation data are respective GNSS navigation data of GNSS satellite 101 of GNSS satellites 101 to 104. It is however to be understood that the invention is not limited to this.

In a step 301, mobile device 2 obtains (e.g. estimates, determines, calculates) a first estimate at least of a current state of at least one GNSS satellite at least partially based on GNSS navigation data relating at least to the current state. In other words, in step 301, mobile device 2 may obtain a first estimate of the current state of the at least one GNSS satellite at least partially based on GNSS navigation data relating to the current state and may obtain a first estimate of a next state subsequent to the current state of the at least one GNSS satellite at least partially based on GNSS navigation data relating to the next state subsequent to the current state. In this way, in step 301, mobile device 2 may obtain one or more first estimates (e.g. one first estimate or a sequence of first estimates) based on respective obtained GNSS navigation data respectively relating to the respective state. Such sequence of estimates of states obtained based on respective GNSS navigation data may correspond to an observation orbit, i.e. a sequence of orbital states (e.g. positions and/or velocities) derived by the mobile device based on GNSS navigation data. In this sense, the GNSS navigation data may be understood to resemble observations or measurements of the orbital state of the corresponding GNSS satellite.

As explained above, the GNSS navigation data relating to a respective state may be obtained (e.g. received) at or by the mobile device 2 from the GNSS satellite to which the GNSS navigation data relate and/or from an assistance data server.

In a step 302, mobile device 2 obtains (e.g. estimates, determines, calculates) a second estimate at least of the current state of the at least one GNSS satellite at least partially based on a system model of motion of the at least one GNSS satellite.

As explained above, the system model of motion of the at least one GNSS satellite may correspond to a mathematical model that enables describing at least part of the orbit of the at least one GNSS satellite and thus enables determining (estimating, calculating) at least position and/or velocity of the at least one GNSS satellite at a certain time. To this end, similar to a case

33        EP 3 805 801 A1        34

where a reference orbit is estimated equations of motion based on forces acting on a satellite, the system model of motion may take into account a previous state (e.g. the above mentioned initial state) to describe the part of the orbit. As mentioned above, the system model of motion may be based e.g. on forces acting on the at least one GNSS satellite and may correspond to one or more corresponding equations of motion. Such force based system model may take into account for example the gravitational force exerted on the satellite by the earth, the gravitational force exerted on the satellite by the sun, the gravitational force exerted on the satellite by the moon and/or a force due to the solar radiation pressure.

In other words, in step 302, mobile device 2 may obtain a second estimate of the current state of the at least one GNSS satellite at least partially based on said system model and may obtain a second estimate of a next state subsequent to the current state of the at least one GNSS satellite at least partially based on said system model. In particular when obtaining the second estimate of the current estimate based on said system model, mobile device 2 may further take into account the above mentioned previous or initial state which may for example be already stored at the mobile device 2 or which may be separately obtained from the at least one GNSS satellite and/or included in or as assistance data from assistance data server 109. In this way, in step 302, mobile device 2 may obtain one or more second estimates (e.g. one second estimate or a sequence of second estimates) based on said system model. Such sequence of estimates of states obtained based on the system model may correspond to a reference orbit, i.e. a sequence of orbital states (e.g. positions and/or velocities) derived by the mobile device based on the system model. In this sense, the system model may enable the mobile device to model or simulate one (e.g. the current) or more (e.g. the sequence) of orbital states independently from the one or more orbital states obtained based on the corresponding GNSS navigation data.

In a step 303, mobile device 2 determines, whether or not the GNSS navigation data are potentially manipulated based on an estimated deviation of the second estimate of the current state of the at least one GNSS satellite from the first estimate of the current state of the at least one GNSS satellite

As explained in detail above, based on such independently obtained one or more orbital positions obtained in addition to the orbital positions based on the corresponding GNSS navigation data, the mobile device is enabled to determine if the corresponding GNSS navigation data is potentially manipulated or spoofed. As detailed above, such determination may be based on a comparison of the one or more independently orbital positions (a comparison of the first estimate at least of the current state with the second estimate at least of the current state). Such comparison may resemble an estimated deviation.

The mobile device is enabled to additionally or alternatively determine if the corresponding GNSS navigation data is potentially manipulated or spoofed based on a measure of the accuracy (for example a covariance) of the second estimate at least of the current state, the second estimate being obtained based on the system model and for example taking into account the first estimate obtained based on the GNSS navigation data relating to the current state and/or the GNSS navigation data relating to the current state. Such measure for the accuracy of the second state such as the covariance may then resemble an estimated deviation.

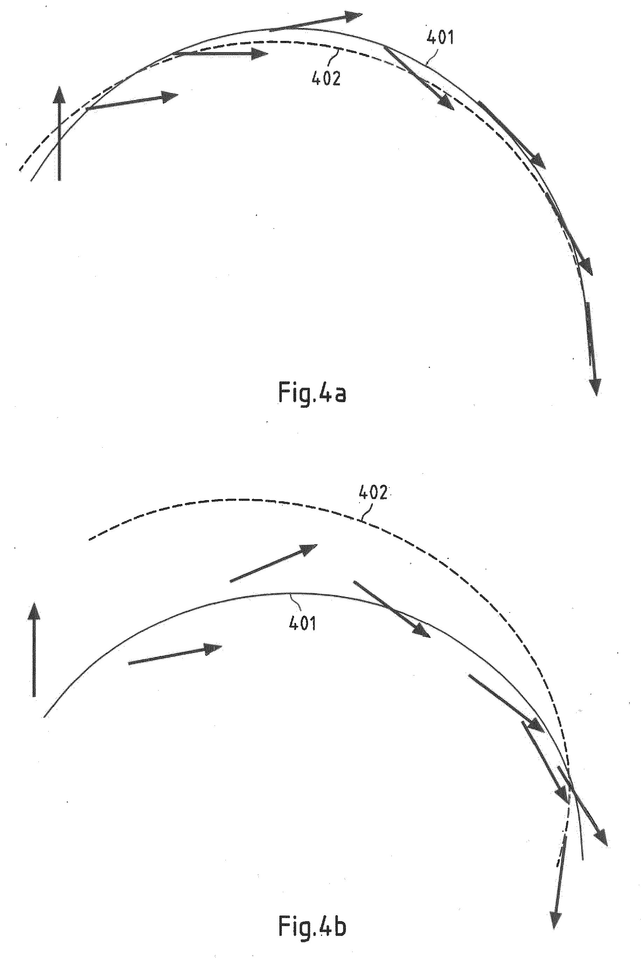

Fig. 4a shows an exemplary observation orbit 401 (based on true GNSS navigation data) and an exemplary reference orbit 402 of the at least one GNSS satellite. The arrows indicate estimates of states, in the example case positions and velocities, of the at least one GNSS satellite obtained from received GNSS navigation data. In the case of Fig. 4a, the exemplary observation orbit 401 and the exemplary reference orbit 402 closely match. In such case and when the mobile device 2 employs a comparison of the reference orbit and the observation orbit as estimated deviation of the second estimate from the first estimate, mobile device 2 may determine the GNSS navigation data as being true, i.e. as not being manipulated. Similarly, if mobile device 2 employs a measure for the accuracy of the reference orbit, e.g. a covariance, as estimated deviation of the second estimate from the first estimate, it is expected that for a case as illustrated in Fig. 4a, mobile device 2 would determine the GNSS navigation data as not manipulated.

Fig. 4b (based on falsified GNSS navigation data) shows a different case of the exemplary observation orbit 401 and the exemplary reference orbit 402 of the at least one GNSS satellite. As in Fig. 4a, the arrows indicate estimates of states, in the example case positions and velocities, of the at least one GNSS satellite obtained from received GNSS navigation data. In the case of Fig. 4b, the exemplary observation orbit 401 and the exemplary reference orbit 402 do not match. In such case and when the mobile device 2 employs a comparison of the reference orbit and the observation orbit as estimated deviation of the second estimate from the first estimate, mobile device 2 may determine the GNSS navigation data as being false, i.e, as potentially being manipulated. Likewise, if mobile device 2 employs a measure for the accuracy of the reference orbit, e.g. a covariance, as estimated deviation of the second estimate from the first estimate, it is expected that for a case as illustrated in Fig. 4b, mobile device 2 would determine the GNSS navigation data as potentially manipulated.

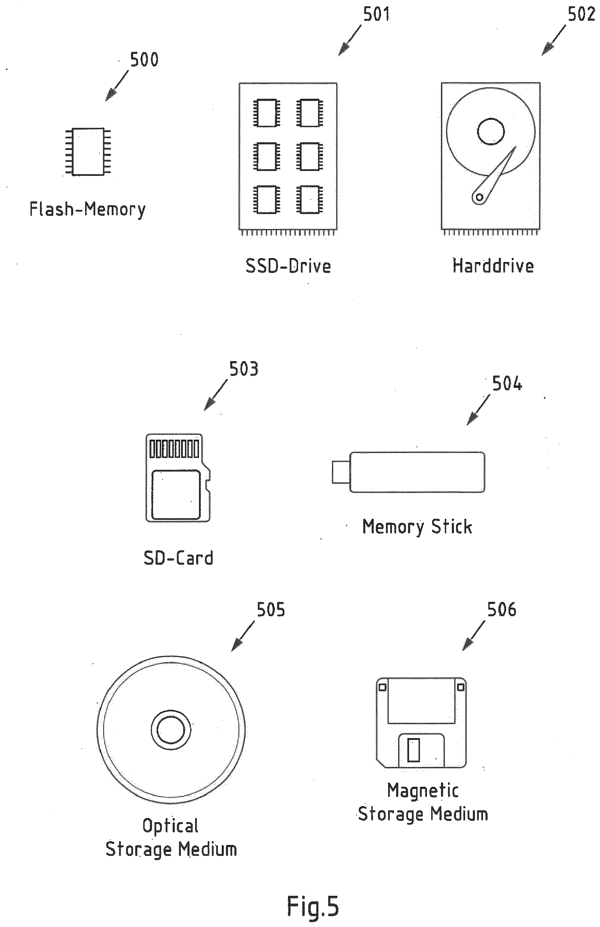

Fig. 5 is a schematic illustration of examples of tangible and non-transitory computer-readable storage media according to the present invention that may for instance be used to implement memory 201 of Fig. 2. To this end, Fig. 5 displays a flash memory 500, which may for instance be soldered or bonded to a printed circuit board, a solid-state drive 501 comprising a plurality of memory chips (e.g. Flash memory chips), a magnetic

18

hard drive 502, a Secure Digital (SD) card 503, a Universal Serial Bus (USB) memory stick 504, an optical storage medium 505 (such as for instance a CD-ROM or DVD) and a magnetic storage medium 506.

The following example embodiments of the invention are also disclosed:

Embodiment 1
A method performed by at least one apparatus, said method comprising:

- obtaining or causing obtaining a first estimate at least of a current state of at least one GNSS satellite at least partially based on GNSS navigation data relating at least to the current state;
- obtaining or causing obtaining a second estimate at least of the current state ($\hat{x}_{k|k}$) of the at least one GNSS satellite at least partially based on a system model of motion of the at least one GNSS satellite;
- determining or causing determining, whether or not the GNSS navigation data are potentially manipulated based on an estimated deviation of the second estimate of the current state of the at least one GNSS satellite from the first estimate of the current state of the at least one GNSS satellite.

Embodiment 2
The method according to embodiment 1, wherein the system model of motion of the at least one GNSS satellite is a mathematical model that enables describing at least part of an orbit of the at least one GNSS satellite.

Embodiment 3
The method according to any of embodiments 1 or 2, wherein the system model of motion enables determining, estimating, or calculating at least position and/or velocity of the at least one GNSS satellite at given points in time.

Embodiment 4
The method according to any of embodiments 1 to 3, wherein the system model of motion of the at least one GNSS satellite is based on forces acting on the at least one GNSS satellite.

Embodiment 5 The method according to embodiment 4, wherein the system model of motion of the at least one GNSS satellite corresponds to at least one equations of motion of the at least one GNSS satellite.

Embodiment 6
The method according to any of embodiments 1 to 5, wherein the GNSS navigation data are determined to be potentially manipulated if the estimated deviation of the second estimate of the current state of the at least one GNSS satellite from the first estimate of the current state of the at least one GNSS satellite is or is representative of a value equal to or larger than a threshold value.

Embodiment 7
The method according to any of embodiments 1 to 6, further comprising:

- obtaining or causing obtaining an estimate of a previous state ($\hat{x}_{k-1|k-1}$) of the at least one GNSS satellite;
- wherein the obtaining or causing obtaining the second estimate of the current state ($\hat{x}_{k|k}$) of the at least one GNSS satellite is further based on the estimate of the previous state of the at least one GNSS satellite.

Embodiment 8
The method according to any of embodiments 1 to 7, wherein the system model of motion of the at least one GNSS navigation satellite is based at least in part on at least one force acting on the at least one GNSS satellite, the at least one force being at least one of:

- a gravitational force caused by the sun;
- a gravitational force caused by the earth;
- a gravitational force caused by the moon; or
- a force caused by the solar radiation pressure.

Embodiment 9
The method according to any of embodiments 1 to 8, wherein the GNSS navigation data and/or the estimate of the previous state ($\hat{x}_{k-1|k-1}$) of the at least one GNSS satellite is obtained at least partially from an assistance data server and/or from the at least one GNSS satellite.

Embodiment 10
The method according to any of embodiments 1 to 11, wherein the estimated deviation of the second estimate of the current state of the at least one GNSS satellite from the first estimate of the current state of the at least one GNSS satellite is representative of a covariance related to the second estimate of the at least one GNSS satellite.

Embodiment 11
The method according to embodiment 10, wherein obtaining or causing obtaining the second estimate of the current state of the at least one GNSS satellite comprises employing or causing employing a filtering and/or smoothing algorithm, in particular a statistical estimation algorithm, based on the system model of motion and based on the GNSS navigation data relating to the current state.

**Embodiment 12**

The method according to any of embodiments 1 to 11, wherein obtaining or causing obtaining the second estimate of the current state $(\hat{x}_{k|k})$ of the at least one GNSS satellite comprises employing or causing employing a filtering and/or smoothing algorithm, in particular wherein employing the filtering and/or smoothing algorithm comprises:

- determining or causing determining an a priori state relating to the current state of the at least one GNSS satellite at least partially based on the system model of motion of the at least one GNSS satellite and the estimate of the previous state $(\hat{x}_{k-1|k-1})$;
- determining or causing determining the current state of the at least one GNSS satellite based on the a priori state relating to the current state of the at least one GNSS satellite and the first estimate of the current state $(\hat{x}_{k|k})$ of the at least one GNSS satellite at least partially based on the GNSS navigation data.

**Embodiment 13**

The method according to any of embodiments 1 to 12, wherein the filtering and/or smoothing algorithm comprises at least one of:

- a Monte Carlo algorithm;
- a Bayes filter;
- a Kalman filter;
- an extended Kalman filter;
- an unscented Kalman filter; and/or
- a cubature Kalman filter.

**Embodiment 14**

The method according to any of embodiments 1 to 13, further comprising:

- determining or causing determining the covariance $(P_{k|k})$ related to the second estimate of the current state of the at least one GNSS satellite based on an accuracy of the GNSS navigation data.

**Embodiment 15**

The method according to any of embodiments 1 to 14, wherein the first estimate of the current state of the at least one GNSS satellite comprises a first estimate of an orbital position of the at least one GNSS satellite at a current time and wherein the second estimate of the current state comprises a second estimate of the orbital position of the at least one GNSS satellite at the current time, and wherein the estimated deviation is representative of a difference between the first estimate of the orbital position and the second estimate of the orbital position of the at least one GNSS satellite at the current time.

**Embodiment 16**

The method according to any of embodiments 1 to 15, wherein obtaining or causing obtaining the second estimate of the current state of the at least one GNSS satellite comprises:

- determining or causing determining the second estimate of the current state of the at least one GNSS satellite based on at least one equation of motion, the at least one equation of motion being at least partially based on the system model of motion of the at least one GNSS satellite.

**Embodiment 17**

The method according to any of embodiments 1 to 15, wherein obtaining or causing obtaining the second estimate of the current state of the at least one GNSS satellite comprises:

- integrating or causing integrating at least one equation of motion to obtain the second estimate of the current state of the at least one GNSS satellite, the at least one equation of motion being at least partially based on the system model of motion of the at least one GNSS satellite.

**Embodiment 18**

The method according to any of embodiments 1 to 17, wherein the system model of motion of the at least one GNSS satellite corresponds to at least one equation of motion obtained based on at least one of:

- a gravitational force caused by the sun;
- a gravitational force caused by the earth;
- a gravitational force caused by the moon; or
- a force caused by the solar radiation pressure.

**Embodiment 19**

The method according to any of embodiments 1 to 18, wherein said GNSS navigation data relating to the current state comprise at least one of ephemeris data of said at least one GNSS satellite and clock data of said at least one GNSS satellite, wherein the ephemeris data represent one or more respective parameter values of one or more orbit parameters enabling determining the first estimate of the orbital position of the at least one GNSS satellite at the current time.

**Embodiment 20**

The method according to any of embodiments 1 to 19, said method further comprising one or more of the following steps, if it is determined that the GNSS navigation data relating to the current state are potentially manipulated:

- identifying or causing of identifying said GNSS navigation data as potentially manipulated;.

- rejecting or causing rejecting said GNSS navigation data;
- if a position of a mobile device is estimated at least partially based on said GNSS navigation data, identifying or causing of identifying said position estimate as potentially manipulated;
- associating or causing associating said GNSS navigation data with a manipulation risk level.

Embodiment 21
The method according to any of embodiments 1 to 20, said method further comprising:

- observing one or more GNSS signals at a position of the at least one apparatus;
- estimating said position of the at least one apparatus at least partially based on said GNSS signals and the GNSS navigation data relating to the current state.

Embodiment 22
The method according to any of embodiments 1 to 21, wherein the at least one apparatus is or comprises:

- a mobile device (2);
- a module for a mobile device (2);
- a server (109); or
- a module for a server (109).

Embodiment 23
The method according to embodiment 22, wherein the mobile device (2) is or comprises:

- a smart home device,
- a smartphone,
- a tablet computer,
- a notebook computer,
- a smart watch,
- a Device-2-Device (D2D) communication device,
- a Vehicle-2-Vehicle (V2V) communication device,
- a Vehicle-2-Everything (V2X) communication device,
- a Road Side Unit (RSU), and/or
- a smart band.

Embodiment 24
A computer program code, the computer program code when executed by a processor causing an apparatus to perform the method according to any of embodiments 1 to 23.

Embodiment 25
An apparatus comprising at least one processor and at least one memory that contains program code, wherein the memory and the program code are configured to use the at least one processor to cause an apparatus to perform and/or control at least the method of any of embodiments 1 to 23.

Embodiment 26
The apparatus according to embodiment 25, wherein the apparatus is or comprises:

- a mobile device (2);
- a module for a mobile device (2);
- a server (109); or
- a module for a server (109).

Embodiment 27
The apparatus according to embodiment 26, wherein the mobile device (2) is or comprises:

- a smart home device,
- a smartphone,
- a tablet computer,
- a notebook computer,
- a smart watch,
- a Device-2-Device (D2D) communication device,
- a Vehicle-2-Vehicle (V2V) communication device,
- a Vehicle-2-Everything (V2X) communication device,
- a Road Side Unit (RSU), and/or
- a smart band.

Any presented connection in the described embodiments is to be understood in a way that the involved components are operationally coupled. Thus, the connections can be direct or indirect with any number or combination of intervening elements, and there may be merely a functional relationship between the components.
Further, as used in this text, the term 'circuitry' refers to any of the following:

(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile device, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof" or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

**Claims**

1. A method performed by at least one apparatus, said method comprising:

   - obtaining or causing obtaining a first estimate at least of a current state of at least one GNSS satellite at least partially based on GNSS navigation data relating at least to the current state;
   - obtaining or causing obtaining a second estimate at least of the current state of the at least one GNSS satellite at least partially based on a system model of motion of the at least one GNSS satellite; and
   - determining or causing determining, whether or not the GNSS navigation data are potentially manipulated based on an estimated deviation of the second estimate of the current state of the at least one GNSS satellite from the first estimate of the current state of the at least one GNSS satellite.

2. The method according to claim 1, further comprising:

   - obtaining or causing obtaining an estimate of a previous state of the at least one GNSS satellite;
   - wherein the obtaining or causing obtaining the second estimate of the current state of the at least one GNSS satellite is further based on the estimate of the previous state of the at least one GNSS satellite.

3. The method according to any of claims 1 or 2, wherein the system model of motion of the at least one GNSS navigation satellite is based at least in part on at least one force acting on the at least one GNSS satellite, the at least one force being at least one of:

   - a gravitational force caused by the sun;
   - a gravitational force caused by the earth;
   - a gravitational force caused by the moon; or
   - a force caused by the solar radiation pressure.

4. The method according to any of claims 2 or 3, wherein the GNSS navigation data and/or the estimate of the previous state of the at least one GNSS satellite is obtained at least partially from an assistance data server and/or from the at least one GNSS satellite.

5. The method according to any of claims 1 to 4, wherein the estimated deviation of the second estimate of the current state of the at least one GNSS satellite from the first estimate of the current state of the at least one GNSS satellite is representative of a covariance related to the second estimate of the at least one GNSS satellite, in particular wherein obtaining or causing obtaining the second estimate of the current state of the at least one GNSS satellite comprises:

   - employing or causing employing a filtering and/or smoothing algorithm, in particular a statistical estimation algorithm, based on the system model of motion and based on the GNSS navigation data relating to the current state.

6. The method according to any of claims 2 to 5, wherein obtaining or causing obtaining the second estimate of the current state of the at least one GNSS satellite comprises employing or causing employing a filtering and/or smoothing algorithm, in particular wherein employing the filtering and/or smoothing algorithm comprises:

- determining or causing determining an a priori state relating to the current state of the at least one GNSS satellite at least partially based on the system model of motion of the at least one GNSS satellite and the estimate of the previous state;
- determining or causing determining the current state of the at least one GNSS satellite based on the a priori state relating to the current state of the at least one GNSS satellite and the first estimate of the current state of the at least one GNSS satellite at least partially based on the GNSS navigation data.

7. The method according to claim 6, wherein the filtering and/or smoothing algorithm comprises at least one of:

- a Monte Carlo algorithm;
- a Bayes filter;
- a Kalman filter;
- an extended Kalman filter;
- an unscented Kalman filter; and/or
- a cubature Kalman filter.

8. The method according to any of claims 5 to 7, further comprising:

- determining or causing determining the covariance related to the second estimate of the current state of the at least one GNSS satellite based on an accuracy of the GNSS navigation data.

9. The method according to any of claims 1 to 8, wherein the first estimate of the current state of the at least one GNSS satellite comprises a first estimate of an orbital position of the at least one GNSS satellite at a current time, wherein the second estimate of the current state comprises a second estimate of the orbital position of the at least one GNSS satellite at the current time, and wherein the estimated deviation is representative of a difference between the first estimate of the orbital position and the second estimate of the orbital position of the at least one GNSS satellite at the current time.

10. The method according to any of claims 1 to 9, wherein obtaining or causing obtaining the second estimate of the current state of the at least one GNSS satellite comprises:

- determining or causing determining the second estimate of the current state of the at least one GNSS satellite based on at least one equation of motion, the at least one equation of motion being at least partially based on the system model of motion of the at least one GNSS satellite.

11. The method according to any of claims 1 to 10, wherein said GNSS navigation data relating to the current state comprise at least one of ephemeris data of said at least one GNSS satellite and clock data of said at least one GNSS satellite, wherein the ephemeris data represent one or more respective parameter values of one or more orbit parameters enabling determining the first estimate of the orbital position of the at least one GNSS satellite at the current time.

12. The method according to any of claims 1 to 11, said method further comprising one or more of the following steps, if it is determined that the GNSS navigation data relating to the current state are potentially manipulated:

- identifying or causing of identifying said GNSS navigation data as potentially manipulated;
- rejecting or causing rejecting said GNSS navigation data;
- if a position of a mobile device is estimated at least partially based on said GNSS navigation data, identifying or causing of identifying said position estimate as potentially manipulated;
- associating or causing associating said GNSS navigation data with a manipulation risk level.

13. A computer program code, the computer program code when executed by a processor causing an apparatus to perform the method according to any of claims 1 to 12.

14. An apparatus comprising at least one processor and at least one memory that contains program code, wherein the memory and the program code are configured to use the at least one processor to cause an apparatus to perform and/or control at least the method of any of claims 1 to 12.

15. The apparatus according to claim 13, wherein the apparatus is or comprises:

- a mobile device (2);
- a module for a mobile device (2);
- a server (109); or
- a module for a server (109).

Fig.1

EP 3 805 801 A1

2

200

204 — GNSS Sensor

Processor

Program Memory ⌐ 201

Main Memory ⌐ 202

203 — Communication Interface

Fig.2

3

Obtain or cause obtaining a first estimate at least of a current state of at least one GNSS satellite at least partially based on GNSS navigation data relating at least to the current state ⌐ 301

Obtain or cause obtaining a second estimate at least of the current state of the at least one GNSS satellite at least partially based on a system model of motion of the at least one GNSS satellite ⌐ 302

Determine or cause determining, whether or not the GNSS navigation data are potentially manipulated based on an estimated deviation of the second estimate of the current state of the at least one GNSS satellite from the first estimate of the current state of the at least one GNSS satellite ⌐ 303

Fig.3

401

402

Fig.4a

402

401

Fig.4b

Fig.5

Europäisches
Patentamt

European
Patent Office

Office européen
des brevets

# EUROPEAN SEARCH REPORT

Application Number

EP 19 20 2543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 633 852 B2 (BAGNALL PETER [GB]; ST MICROELECTRONICS RES & DEV [GB]) 21 January 2014 (2014-01-21) | 1-4,9-15 | INV. G01S19/21 |
| Y | * column 6, line 63 - column 7, line 54; | 6,7 | |
| A | figure 4 * | 5,8 | |
| | ----- | | |
| X | CN 108 931 789 A (UNICORE COMMUNICATIONS SHANGHAI INC; UNICORE COMMUNICATIONS INC) 4 December 2018 (2018-12-04) | 1-5,8-15 | |
| A | * Translated document attached.; page 3 - page 4 * | 6,7 | |
| | ----- | | |
| Y | US 2015/084812 A1 (SERNIK ENRIQUE [US]) 26 March 2015 (2015-03-26) * paragraph [0018] - paragraph [0043]; figures 1-3 * | 6,7 | |
| | ----- | | |

TECHNICAL FIELDS
SEARCHED        (IPC)

G01S

The present search report has been drawn up for all claims

| Place of search | Date of completion of the search | Examiner |
|---|---|---|
| Munich | 26 March 2020 | Fanjul Caudevilla, J |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.........................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 19 20 2543

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2020

| Patent document cited in search report | | | Publication date | Patent family member(s) | | Publication date |
|---|---|---|---|---|---|---|
| US 8633852 | B2 | | 21-01-2014 | GB<br>US<br>US | 2483713 A<br>2012072112 A1<br>2014100778 A1 | 21-03-2012<br>22-03-2012<br>10-04-2014 |
| CN 108931789 | A | | 04-12-2018 | NONE | | |
| US 2015084812 | A1 | | 26-03-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUHA ALA-LUHTALA ; MARI SEPPÄNEN ; SIMO ALI-LÖYTTY ; ROBERT PICHÉ ; HENRI NURMINEN.** Estimation of initial state and model parameters for autonomous GNSS orbit prediction. *International Global Navigation Satellite Systems Society Symposium 2013 (IGNSS2013),* July 2013
- **SIMO SÄRKKÄ.** Bayesian Filtering and Smoothing. Cambridge University Press, 2013

- **JUHA ALA-LUHTALA ; MARI SEPPÄNEN ; SIMO ALI-LÖYTTY ; ROBERT PICHE ; HENRI NURMINEN.** Estimation of initial state and model parameters for autonomous GNSS orbit prediction. *International Global Navigation Satellite Systems Society Symposium 2013 (IGNSS2013),* July 2013